# EUROPÄISCHE PATENTSCHRIFT

(11) **EP 3 699 465 B1**
(45) Veröffentlichungstag und Bekanntmachung des Hinweises auf die Patenterteilung: **14.09.2022**
(21) Anmeldenummer: 20158114.7
(22) Anmeldetag: 19.02.2020
(51) Int. Cl.: F16K 11/16, F16K 31/383, F16K 31/40, F16K 31/385, F16K 31/524, F16K 31/08, F16K 31/56, E03C 1/04

(54) **UMSTELLVENTILVORRICHTUNG**
ADJUSTMENT VALVE DEVICE
DISPOSITIF DE SOUPAPE D'INVERSION

(30) Priorität: 20.02.2019 DE 102019202273
(43) Veröffentlichungstag der Anmeldung: 26.08.2020
(73) Patentinhaber: Hansgrohe SE, 77761 Schiltach (DE)
(72) Erfinder: Braunwarth, Anja, 77761 Schiltach (DE); Dieterle, Daniel Philipp, 77709 Wolfach-Kirnbach (DE); Dold, Florian, 77716 Hofstetten (DE); King, Jürgen, 78730 Lauterbach (DE); Meier, Fridolin, 77709 Oberwolfach (DE)
(74) Vertreter: Patentanwälte Ruff, Wilhelm, Beier, Dauster & Partner mbB

(56) Entgegenhaltungen:
- CN-B- 105 605 247
- DE-A1-102017 115 191

## Beschreibung

Die Erfindung bezieht sich auf eine Umstellventilvorrichtung mit einem Ventilgehäuse, einem Fluideinlass in das Ventilgehäuse, einem ersten Fluidauslass aus dem Ventilgehäuse und einem zweiten Fluidauslass aus dem Ventilgehäuse, wobei die Umstellventilvorrichtung dafür eingerichtet ist, ein am Fluideinlass zugeführtes Fluid wahlweise zum ersten oder zum zweiten Fluidauslass weiterzuleiten.

Umstellventilvorrichtungen dieser Art dienen dazu, das zugeführte Fluid steuerbar entweder am ersten oder am zweiten Fluidauslass bereitzustellen bzw. dort abzugeben. Demzufolge besitzt diese Umstellventilvorrichtung keine Absperrfunktion, durch die zugeführtes Fluid gegenüber einer Weiterleitung abgesperrt wird, vielmehr wird das zugeführte Fluid immer zu mindestens einem von zwei oder mehr Fluidauslässen weitergeleitet. Mit anderen Worten hält der vorliegend betrachtete Typ von Umstellventilvorrichtung im stationären Betrieb, d.h. abgesehen von etwaigen Umschalteffekten, von den beiden Fluidverbindungen, die den Fluideinlass mit dem ersten bzw. mit dem zweiten Fluidauslass verbinden, stets die eine Fluidverbindung geöffnet und die andere geschlossen. Falls zusätzlich optional ein oder mehrere weitere Fluidauslässe vorgesehen sind, kann die betreffende Fluidverbindung vom Fluideinlass zum jeweiligen weiteren Fluidauslass je nach Wunsch synchron zur Fluidverbindung vom Fluideinlass zum ersten oder zum zweiten Fluidauslass geöffnet oder geschlossen, d.h. abgesperrt, sein. Falls zusätzlich eine Absperrfunktion gefordert ist, kann der Umstellventilvorrichtung eine entsprechende Absperrventilvorrichtung zugeordnet sein, z.B. stromaufwärts des Fluideinlasses oder alternativ stromabwärts des ersten und/oder des zweiten Fluidauslasses.

Derartige Umstellventilvorrichtungen werden beispielsweise in der Sanitärtechnik als sanitäre Umstellvorrichtungen dazu verwendet, zugeführtes Fluid, in diesem Fall typischerweise Wasser, wahlweise über den ersten Fluidauslass einer ersten Verbraucherstelle, z.B. einem Badewannenauslauf, oder über den zweiten Fluidauslass einer zweiten Verbraucherstelle, z.B. einer Badewannen-Handbrause, zuzuführen oder in sanitären Dusch- oder Küchenbrausen, die für mehrere Brausestrahlarten ausgelegt sind, das Brausefluid wahlweise einer Fluidführung für eine erste Brausestrahlart oder einer Fluidführung für eine zweite Brausestrahlart zuzuführen. Herkömmliche sanitäre Umstellventilvorrichtungen erfordern häufig relativ hohe, vom Benutzer aufzuwendende Umstellkräfte und/oder stellen sich selbsttätig in eine der beiden Ventilstellungen als einer bestimmten Ausgangsstellung zurück, wenn die Fluidzufuhr abgestellt wird, so dass die andere Ventilstellung beim Öffnen der Fluidzufuhr jedes Mal wieder erneut eingestellt werden muss.

Die Offenlegungsschrift DE 10 2012 221 043 A1 offenbart eine Absperrventilvorrichtung mit einer pilotventilgestützt nutzerbetätigten Membranventileinheit, die einen Membranventilkörper mit einer Vorsteuerung durch ein Pilotventil umfasst, das einen axialbeweglichen Pilotventil-Steuerkolben aufweist, der vom Benutzer über eine Drucktasten-Bedieneinheit betätigbar ist. Die Bedieneinheit umfasst eine axialbewegliche Drucktaste, eine Weiterschalteinrichtung, die dafür sorgt, dass die Drucktaste in einer Absperrstellung der Ventilvorrichtung einerseits und einer Offenstellung der Ventilvorrichtung andererseits unterschiedliche Positionen einnimmt, und eine Magneteinheit zur Übertragung der axialen Drucktastenbewegung auf den Steuerkolben. Eine ähnliche Absperrventilvorrichtung ist in der älteren deutschen Patentanmeldung 10 2018 204 147.4 offenbart. Weitere Absperrventilvorrichtungen mit pilotventilgestützt vom Benutzer drucktastenbetätigter Membranventileinheit sind in den Offenlegungsschriften JP 2005-264459 A und DE 10 2017 115 191 A1 offenbart.

Die Offenlegungsschrift CN 105605247 B offenbart eine Umstellventilvorrichtung der eingangs genannten Art mit einem Dreiwege-Ventilgehäusekörper und einer symmetrischen Anordnung zweier gekoppelt nutzerbetätigt simultan umschaltbarer Absperrventile, wobei jeweils das eine Absperrventil geöffnet und das andere geschlossen wird. Dazu sind die beiden Absperrventile ebenso wie eine Zwischenkammer mit ihrem Einlass strömungstechnisch parallel an die Auslassseite einer Einlasskammer angekoppelt, und zwischen der Auslassseite der Zwischenkammer und der Auslassseite des jeweiligen Absperrventils verläuft je ein Druckentlastungskanal, in dem sich ein jeweiliges Druckentlastungsventil befindet, wobei die beiden Druckentlastungsventile durch eine gemeinsame Steuerstange vom Benutzer simultan gegensätzlich zwischen ihrer Offen- und ihrer Schließstellung umgeschaltet werden können.

Der Erfindung liegt als technisches Problem die Bereitstellung einer Umstellventilvorrichtung der eingangs genannten Art zugrunde, die gegenüber dem oben erwähnten Stand der Technik Vorteile hinsichtlich Funktionsweise, Fertigungsaufwand und/oder Betriebszuverlässigkeit bietet.

Die Erfindung löst dieses Problem durch die Bereitstellung einer Umstellventilvorrichtung mit den Merkmalen des Anspruchs 1.

Diese Umstellventilvorrichtung umfasst ein Ventilgehäuse, einen Fluideinlass in das Ventilgehäuse, eine Einlasskammer im Ventilgehäuse, in die der Fluideinlass mündet, eine Zwischenkammer im Ventilgehäuse, die über einen permanent offenen Verbindungskanal mit der Einlasskammer in Fluidverbindung steht, einen ersten Fluidauslass aus dem Ventilgehäuse, der über einen absperrbaren ersten Auslasskanal mit der Einlasskammer in Fluidverbindung steht, einen zweiten Fluidauslass aus dem Ventilgehäuse, der über einen absperrbaren zweiten Auslasskanal mit der Zwischenkammer in Fluidverbindung steht, eine selbsttätig fluiddruckgesteuerte, erste Absperrventileinheit zum Öffnen und Schließen des ersten absperrbaren Auslasskanals und eine nutzerbetätigte, zweite Absperrventileinheit zum Öffnen und Schließen des zweiten absperrbaren Auslasskanals. Dabei weist die erste Absperrventileinheit einen Ventilkolben auf, der von der Differenz eines auf ihn wirkenden Fluiddrucks von der Einlasskammer einerseits und der Zwischenkammer andererseits gesteuert zwischen einer den ersten Auslasskanal öffnenden Offenstellung und einer den ersten Auslasskanal absperrenden Schließstellung bewegbar ist. Die zweite Absperrventileinheit weist einen nutzerbetätigt zwischen einer den zweiten Auslasskanal öffnenden Offenstellung und einer den zweiten Auslasskanal absperrenden Schließstellung bewegbaren Ventilschließkörper auf. Der Ventilkolben nimmt seine Schließstellung ein, wenn sich der Ventilschließkörper in seiner Offenstellung befindet, und der Ventilkolben nimmt seine Offenstellung ein, wenn sich der Ventilschließkörper in seiner Schließstellung befindet.

Durch diesen speziellen Ventilaufbau mit einer spezifischen, selbsttätig fluiddruckgesteuerten, ersten Absperrventileinheit für die Fluidverbindung vom Fluideinlass zum ersten Fluidauslass und einer nutzerbetätigten, zweiten Absperrventileinheit für die Fluidverbindung zum zweiten Fluidauslass ermöglicht diese Umstellventilvorrichtung gegenüber herkömmlichen Umstellventilvorrichtungen der eingangs genannten Art Vorteile hinsichtlich Fertigungsaufwand, Funktionsweise und/oder Betriebszuverlässigkeit. So lässt sich diese Umstellventilvorrichtung problemlos dergestalt realisieren, dass die vom Benutzer aufzuwendende Betätigungskraft vergleichsweise gering gehalten werden kann und/oder dass beim Abstellen der Fluidzufuhr die zuletzt eingestellte Ventilstellung beibehalten bleibt. Dazu trägt insbesondere auch die Aufteilung der Umstellventilfunktion in die beiden Absperrventileinheiten bei, von denen nur die eine vom Benutzer betätigt werden braucht, während die andere selbsttätig mittels Fluiddruck arbeitet, d.h. zwischen ihrer Offen- und ihrer Schließstellung umschaltet. Die beiden Absperrventileinheiten wirken getrennt auf jeweils eine der beiden Fluidverbindungen vom Fluideinlass einerseits zum ersten bzw. zweiten Fluidauslass andererseits, wobei diese beiden Fluidverbindungen über die Einlasskammer und die permanent offene Verbindung der Zwischenkammer zur Einlasskammer miteinander gekoppelt bleiben, so dass die Fluiddrucksteuerung der zweiten Absperrventileinheit geeignet erfolgen kann.

In einer Weiterbildung der Erfindung ist der Ventilkolben axialbeweglich angeordnet und weist eine der Zwischenkammer zugewandte, erste Kolbenstirnseite sowie eine der Einlasskammer zugewandte, zweite Kolbenstirnseite auf, wobei eine Druckkontaktfläche der ersten Kolbenstirnseite größer als eine Druckkontaktfläche der zweiten Kolbenstirnseite ist. Dies stellt eine für die gewünschte Funktion des Ventilkolbens konstruktiv vorteilhafte Realisierung des Ventilkolbens dar. In einer fertigungstechnisch und funktionell vorteilhaften Ausführung ist der Ventilkolben in einer Hohlkammer im Ventilgehäuse angeordnet und teilt die Hohlkammer in die Zwischenkammer und die Einlasskammer auf, wobei über den Verbindungskanal eine Fluidverbindung von Einlasskammer und Zwischenkammer aufrechterhalten bleibt. In alternativen Ausführungen sind die Einlasskammer und die Zwischenkammer von jeweils eigenen Hohlräumen im Ventilgehäuse gebildet, zwischen denen sich der Ventilkolben erstreckt.

In einer Ausgestaltung der Erfindung weist der Ventilkolben einen sich von der zweiten Kolbenstirnseite axial erstreckenden kolbenstangenförmigen Fortsatz auf, an dem ein Ventilschließteil ausgebildet ist, der mit einem gehäuseseitigen Ventilsitz zusammenwirkt. In dieser Ausführung kann der erste Auslasskanal durch das Zusammenwirken des Ventilschließteils mit dem Ventilsitz geschlossen und geöffnet werden. In alternativen Ausführungen besitzt der Ventilkolben ein anderes, z.B. herkömmliches Schließmittel, mit dem er den ersten Auslasskanal wahlweise öffnen und schließen kann.

In einer Weiterbildung der Erfindung ist die zweite Absperrventileinheit eine pilotventilgestützt nutzerbetätigte Membranventileinheit. Diese Realisierung der zweiten Absperrventileinheit kann vorteilhaft dazu beitragen, die vom Benutzer aufzuwendende Betätigungskraft gering zu halten, indem ein Pilotventil den Benutzer bei der Betätigung der Membranventileinheit unterstützt. In alternativen Ausführungen ist die zweite Absperrventileinheit von einem anderen herkömmlichen Ventiltyp, wie er für Absperrventile herkömmlich verwendet wird, z.B. von einem Typ mit einem vom Benutzer direkt betätigbaren, mit einem Ventilsitz zusammenwirkenden Ventilschließkörper.

In einer Ausgestaltung der Erfindung umfasst die Umstellventilvorrichtung ein der Membranventileinheit zugeordnetes Pilotventil mit einem axialbeweglichen Pilotventil-Steuerkolben sowie eine auf den Pilotventil-Steuerkolben wirkende, nutzerbetätigte Drucktasten-Bedieneinheit. Dies stellt eine konstruktiv und funktionell vorteilhafte Realisierung für die zweite Absperrventileinheit und für die ihr zugeordneten, vom Benutzer zu bedienenden Betätigungsmittel dar. In alternativen Ausführungen ist ein anderes herkömmliches Pilotventil vorgesehen, und/oder für das Pilotventil ist ein anderes Nutzerbetätigungsmittel vorgesehen, z.B. eine Bedieneinheit, die einen Betätigungsschieber, einen Drehknopf, einen Schwenkhebel oder dergleichen beinhaltet, der auf das Pilotventil wirkt.

In einer Ausgestaltung der Erfindung beinhaltet die Drucktasten-Bedieneinheit eine Drucktaste, die eine erste Schaltstellung einnimmt, wenn sich der Ventilschließkörper in seiner Offenstellung befindet, und eine zweite Schaltstellung einnimmt, wenn sich der Ventilschließkörper in seiner Schließstellung befindet, wobei die Drucktaste in diesen beiden Schaltstellungen unterschiedliche Axialpositionen besitzt. Bei dieser Realisierung der Drucktasten-Bedieneinheit kann der Benutzer anhand der Axialposition der Drucktaste erkennen, ob sich die nutzerbetätigte, zweite Absperrventileinheit momentan in ihrer Offenstellung oder in ihrer Schließstellung befindet.

In einer Weiterbildung der Erfindung ist das Ventilgehäuse zylindrisch, und von dem ersten und dem zweiten Fluidauslass befindet sich der eine Fluidauslass an einem Zylinderumfangsabschnitt des Ventilgehäuses, während sich der andere Fluidauslass an einem ersten axialen Stirnende des Ventilgehäuses befindet. Dies stellt eine konstruktiv und funktionell vorteilhafte Anordnung dieser beiden Fluidauslässe am Ventilgehäuse dar. In alternativen Ausführungen sind die Fluidauslässe in anderer Weise am Ventilgehäuse angeordnet, z.B. beide an je einem Zylinderumfangsabschnitt des Ventilgehäuses oder an gegenüberliegenden Stirnenden des Ventilgehäuses, oder das Ventilgehäuse besitzt eine nicht-zylindrische Form, z.B. eine Kugel- oder Quaderform.

In einer Ausgestaltung der Erfindung befindet sich der Fluideinlass in das Ventilgehäuse axial zwischen dem ersten und dem zweiten Fluidauslass. Auch dies stellt eine funktionell und konstruktiv für entsprechende Anwendungen vorteilhafte Anordnung des ersten und des zweiten Fluidauslasses sowie des Fluideinlasses dar. In alternativen Ausführungen ist der Fluideinlass axial außerhalb des Bereichs zwischen dem ersten und dem zweiten Fluidauslass angeordnet, beispielsweise an einem axialen Stirnende des zylindrischen Ventilgehäuses oder mit geringerem Abstand zu diesem axialen Stirnende als der erste und der zweite Fluidauslass.

In einer Ausgestaltung der Erfindung befindet sich die Drucktaste an einem dem ersten abgewandten, zweiten axialen Stirnende des Ventilgehäuses. Dies stellt eine für viele Anwendungen vorteilhafte Positionierung der Drucktaste in Bezug auf die Anordnung des ersten und des zweiten Fluidauslasse dar. In alternativen Ausführungen ist die Drucktaste an einer anderen Stelle des Ventilgehäuses angeordnet, z.B. an einem zugeordneten Zylinderumfangsabschnitt des zylindrischen Ventilgehäuses.

Vorteilhafte Ausführungsformen der Erfindung sind in den Zeichnungen dargestellt. Diese und weitere vorteilhafte Ausführungsformen der Erfindung werden nachfolgend näher erläutert. Hierbei zeigen:
- Fig. 1: eine Seitenansicht einer Umstellventilvorrichtung mit einem zylindrischen Ventilgehäuse, einem umfangsseitigen Fluideinlass, einem stirnseitigen ersten Fluidauslass und einem umfangsseitigen zweiten Fluidauslass,
- Fig. 2: eine perspektivische Explosionsansicht der Umstellventilvorrichtung von Fig. 1,
- Fig. 3: eine Längsschnittansicht der Umstellventilvorrichtung von Fig. 1 bei geöffnetem ersten Fluidauslass,
- Fig. 4: eine Detailansicht eines Bereichs IV in Fig. 3,
- Fig. 5: eine Längsschnittansicht entsprechend Fig. 3 bei geöffnetem zweitem Fluidauslass und
- Fig. 6: eine Detailansicht eines Bereichs VI in Fig. 5.

Die in den Figuren gezeigte Umstellvorrichtung, bei der es sich insbesondere um eine sanitäre Umstellventilvorrichtung handeln kann, beinhaltet ein Ventilgehäuse 1, einen Fluideinlass 2 in das Ventilgehäuse 1, eine Einlasskammer 3 im Ventilgehäuse 1, eine Zwischenkammer 4 im Ventilgehäuse 1, einen ersten Fluidauslass 5 aus dem Ventilgehäuse 1, einen zweiten Fluidauslass 6 aus dem Ventilgehäuse 1, eine erste Absperrventileinheit 7 und eine zweite Absperrventileinheit 8.

Der Fluideinlass 2 mündet in die Einlasskammer 3. Die Zwischenkammer 4 steht über einen permanent offenen Verbindungskanal 9 in entsprechend bleibend aufrechterhaltener, ununterbrochener Fluidverbindung mit der Einlasskammer 3. Der erste Fluidauslass 5 steht über einen absperrbaren ersten Auslasskanal 10 in Fluidverbindung mit der Einlasskammer 3. Der zweite Fluidauslass 6 steht über einen absperrbaren zweiten Auslasskanal 11 in Fluidverbindung mit der Zwischenkammer 4. In der Zwischenkammer 4 kann optional ein Partikelsieb 36 angeordnet sein, wie im gezeigten Beispiel.

Die erste Absperrventileinheit 7 ist selbsttätig fluiddruckgesteuert ausgeführt und dient dazu, den ersten Auslasskanal 10 wahlweise zu öffnen und zu schließen. Die zweite Absperrventileinheit 8 ist nutzerbetätigt ausgeführt und dient zum wahlweisen Öffnen und Schließen des zweiten Auslasskanals 11.

Die erste Absperrventileinheit 7 weist einen Ventilkolben 12 auf, der von der Differenz eines auf ihn wirkenden Fluiddrucks von der Einlasskammer 3 einerseits und der Zwischenkammer 4 andererseits gesteuert zwischen einer den ersten Auslasskanal 10 öffnenden Offenstellung und einer den ersten Auslasskanal 10 absperrenden Schließstellung bewegbar ist. Die zweite Absperrventileinheit 8 beinhaltet einen nutzerbetätigt zwischen einer den zweiten Auslasskanal 11 öffnenden Offenstellung und einer den zweiten Auslasskanal 11 absperrenden Schließstellung bewegbaren Ventilschließkörper 13.

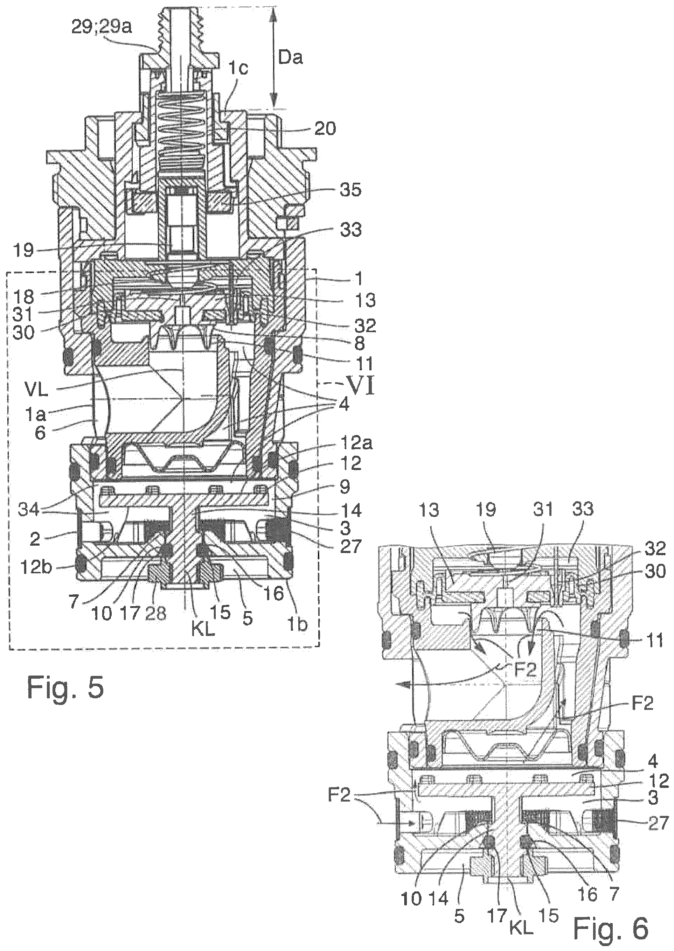

Der Ventilkolben 12 nimmt seine Schließstellung ein, wenn sich der Ventilschließkörper 13 in seiner Offenstellung befindet. Die Fig. 5 und 6 zeigen die Umstellventilvorrichtung in diesem Schaltzustand, bei dem folglich ein Fluid, das am Fluideinlass 2 zugeführt wird und in die Einlasskammer 3 gelangt, über den Verbindungskanal 9, die Zwischenkammer 4 und den geöffneten Auslasskanal 11 zum zweiten Fluidauslass 6 strömen und dort aus dem Ventilgehäuse 1 austreten kann, wie in Fig. 6 durch zugehörige Fluidströmungspfeile F2 symbolisiert. Hingegen ist der erste Auslasskanal 10 durch den Ventilkolben 12 abgesperrt, so dass kein Fluid von der Einlasskammer 3 zum ersten Fluidauslass 5 gelangt.

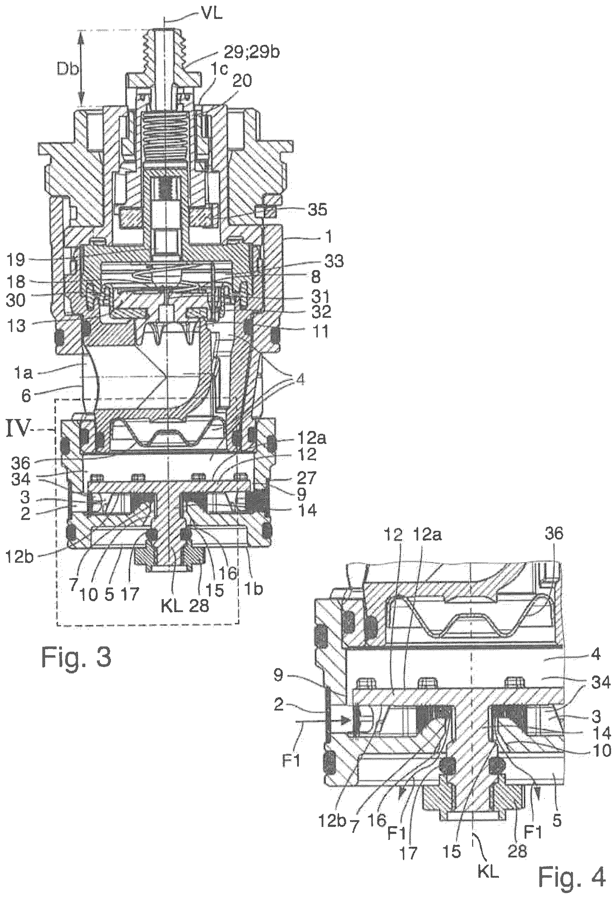

Der Ventilkolben 12 nimmt seine Offenstellung ein, wenn sich der Ventilschließkörper 13 in seiner Schließstellung befindet. Die Fig. 3 und 4 veranschaulichen die Umstellventilvorrichtung in diesem Schaltzustand. Über den Fluideinlass 2 in die Einlasskammer 3 gelangendes Fluid, z.B. Wasser, strömt in diesem Fall über den geöffneten ersten Auslasskanal 10 zum ersten Fluidauslass 5 und kann dort aus dem Ventilgehäuse 1 austreten, wie in Fig. 4 durch Fluidströmungspfeile F1 veranschaulicht. Zwar kann über den offenen Verbindungskanal 9 Fluid von der Einlasskammer 3 auch zur Zwischenkammer 4 gelangen, von dort kann es jedoch nicht mehr zum zweiten Fluidauslass 6 weiterströmen, da der Ventilschließkörper 13 den zweiten Auslasskanal 11 absperrt.

Die gezeigte Umstellventilvorrichtung lässt sich zwischen diesen beiden erwähnten Schaltzuständen umschalten. Dazu ist die zweite Absperrventileinheit 8 dafür eingerichtet, nutzerbetätigt in ihre jeweils andere Ventilstellung umgeschaltet werden zu können, d.h. der Benutzer kann die zweite Absperrventileinheit 8 betätigen, um deren Ventilschließkörper 13 von seiner Offenstellung in seine Schließstellung bzw. von seiner Schließstellung in seine Offenstellung zu bewegen. Die erste Absperrventileinheit 7 ist dafür eingerichtet, gesteuert vom Fluiddruck selbsttätig ihren Ventilkolben 12 von seiner Schließstellung in seine Offenstellung bzw. von seiner Offenstellung in seine Schließstellung zu bewegen.

Wenn die zweite Absperrventileinheit 8 den zweiten Auslasskanal 11 geschlossen hält, bleibt das Fluid in der Zwischenkammer 4 gestaut, und durch diesen Staudruck in der Zwischenkammer 4 wird der Ventilkolben 12 in seine den ersten Auslasskanal 10 öffnende Offenstellung gedrückt. Dazu ist der Fluiddruck von der Zwischenkammer 4 auf den Ventilkolben 12 größer als der Fluiddruck von der Einlasskammer 3 auf den Ventilkolben 12. Dies lässt sich beispielsweise dadurch erreichen, dass der Ventilkolben 12 zur Zwischenkammer 4 hin eine größere effektive Druckkontaktfläche besitzt als zur Einlasskammer 3 hin. Wenn die zweite Absperrventileinheit 8 den zweiten Auslasskanal 11 offen hält, kann das Fluid aus der Zwischenkammer 4 über den zweiten Fluidauslass 6 abströmen, wodurch in der Zwischenkammer 4 ein gegenüber der Einlasskammer 3 niedrigerer Fluiddruck vorliegt, so dass der Fluiddruck in der Einlasskammer 3 den Ventilkolben 12 in seine den ersten Auslasskanal 10 absperrende Schließstellung drückt. Die für eine sichere, zuverlässige selbsttätige Umschaltfunktion der ersten Absperrventileinheit 7 nötige Fluiddifferenz zwischen Einlasskammer 3 und Zwischenkammer 4 kann bei Bedarf durch entsprechende Realisierung des Verbindungskanals 9 hinsichtlich seiner Lage und/oder der Dimensionierung seines effektiven Durchströmquerschnitts geeignet eingestellt werden.

Auf diese Weise folgt die erste Absperrventileinheit 7 in ihrem Umschaltverhalten selbsttätig durch Fluiddrucksteuerung dem nutzerbetätigt initiierten Schaltverhalten der zweiten Absperrventileinheit 8. Es ist keinerlei Nutzerbetätigungseingriff in die erste Absperrventileinheit 7 erforderlich. Durch die Aufsplittung der Umstellventilvorrichtung in die beiden eigenständigen Absperrventileinheiten 7, 8 lassen sich bei Bedarf die beiden Fluidströmungspfade vom Fluideinlass 3 zum ersten Fluidauslass 5 einerseits und vom Fluideinlass 3 zum zweiten Fluidauslass 6 andererseits individuell und unabhängig voneinander optimieren.

In vorteilhaften Ausführungsformen ist wie beim gezeigten Beispiel der Ventilkolben 12 axialbeweglich, d.h. parallel zu einer Kolbenlängsachse KL beweglich, angeordnet und weist eine der Zwischenkammer 4 zugewandte, erste Kolbenstirnseite 12a und eine der Einlasskammer 3 zugewandte, zweite Kolbenstirnseite 12b auf. Dabei ist eine Drucckontaktfläche der ersten Kolbenstirnseite 12a größer als eine Druckkontaktfläche der zweiten Kolbenstirnseite 12b. Im gezeigten Beispiel besitzen die beiden Kolbenstirnseiten 12a, 12b zwar eine gleiche, kreisrunde Außenabmessung, von der zweiten Kolbenstirnseite 12b steht jedoch ein sich axial erstreckender Fortsatz 14 ab, dessen laterale Abmessung nicht als Druckkontaktfläche für in der Einlasskammer 3 befindliches Fluid zur Verfügung steht.

In einer konstruktiv vorteilhaften Ausführung ist wie im gezeigten Beispiel der Ventilkolben 12 in einer Hohlkammer 34 im Ventilgehäuse 1 angeordnet und teilt die Hohlkammer 34 in die Zwischenkammer 4 und die Einlasskammer 3 auf. Über den Verbindungskanal 9 bleibt eine Fluidverbindung von Einlasskammer 3 und Zwischenkammer 4 aufrechterhalten. In alternativen Ausführungen sind die Einlasskammer 3 und die Zwischenkammer 4 von jeweils eigenen Hohlräumen im Ventilgehäuse 1 gebildet, wobei sich dann der Ventilkolben z.B. als ein Doppelkolben mit Kolbenstange und zwei endseitigen Einzelkolben vom einen zum anderen Hohlraum erstrecken kann.

In einer vorteilhaften Realisierung erstreckt sich der bereits erwähnte Fortsatz 14 axial von der zweiten Kolbenstirnseite 12b kolbenstangenförmig und weist einen Ventilschließteil 15 auf. Gehäuseseitig ist in diesem Fall ein korrespondierender Ventilsitz 16 vorgesehen, mit dem der Ventilschließteil 15 des Fortsatzes 14 zusammenwirkt. Der Ventilsitz 16 kann z.B. eine kegelstumpfförmige Sitzfläche aufweisen, gegen die eine korrespondierend kegelstumpfförmige Ventilschließfläche und/oder ein Ventildichtring 17 des Ventilschließteils 15 fluiddicht zur Anlage kommen kann.

In vorteilhaften Ausführungen ist die zweite Absperrventileinheit 8 wie beim gezeigten Ausführungsbeispiel als eine pilotgestützt nutzerbetätigte Membranventileinheit realisiert. Hierbei kann die Umstellventilvorrichtung wie im gezeigten Beispiel ein der Membranventileinheit zugeordnetes Pilotventil 18 mit einem axialbeweglichen Pilotventil-Steuerkolben 19 und eine auf den Pilotventil-Steuerkolben 19 wirkende, nutzerbetätigte Drucktasten-Bedieneinheit 20 umfassen. Eine derartige Realisierung der zweiten Absperrventileinheit 8 eignet sich besonders dazu, die vom Benutzer zum Umschalten der Umstellventilvorrichtung aufzuwendenden Betätigungskräfte gering zu halten und für den Benutzer einen vergleichsweise hohen Bedienkomfort zu ermöglichen. In einer konstruktiv vorteilhaften Ausführung sind die zweite Absperrventileinheit 8 in Form der pilotgestützt nutzerbetätigten Membranventileinheit und die Drucktasten-Bedieneinheit 20 wie im gezeigten Beispiel in eine zylinderförmige Ventilkartusche 21 integriert.

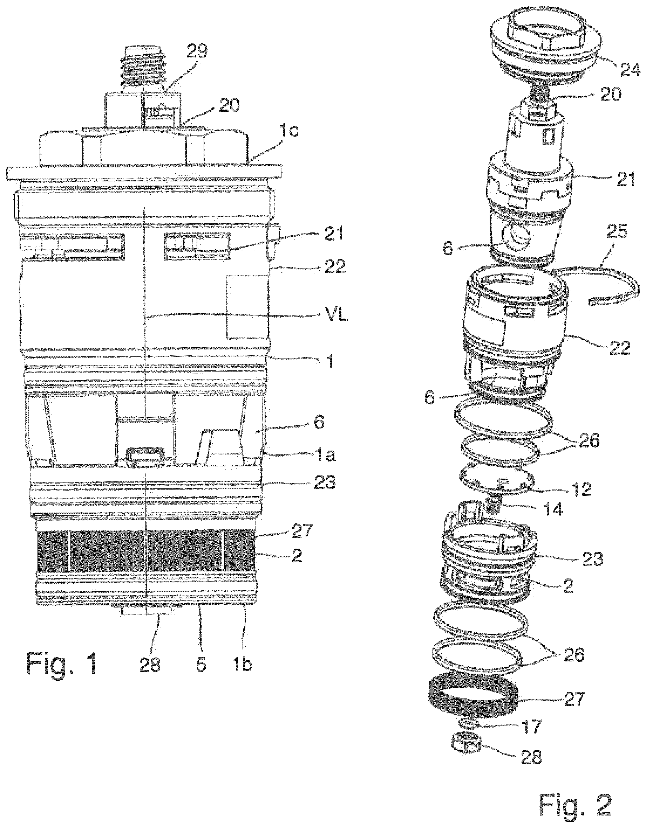

Die Ventilkartusche 21 kann mit den weiteren Bauteilen, wie sie aus der Explosionsdarstellung von Fig. 2 ersichtlich sind, zur Umstellventilvorrichtung in der Realisierung des gezeigten Beispiels vervollständigt werden. Zu diesen Bauteilen gehören in dieser Ausführung insbesondere eine die Kartusche 21 aufnehmende Gehäusehülse 22, die zusammen mit der Kartusche 21 den zweiten Fluidauslass 6 bildet, eine untere Gehäuseabschlusshülse 23, an der umfangsseitig der Fluideinlass 2 gebildet ist und aus dem axial der erste Fluidauslass 5 austritt, und eine obere Gehäuseabschlusshülse 24, welche die Kartusche 21 in der Aufnahmehülse 22 festhält. Des Weiteren sind in Fig. 2 der Ventilkolben 12, ein Klemmring 25, diverse O-Dichtringe 26, ein ringförmiges Einlasssieb 27 für den Fluideinlass 2, der Ventildichtring 17 und eine auf den Ventilkolben-Fortsatz 14 aufzuschraubende Abschlussmutter 28 zu erkennen.

In entsprechenden Ausführungen beinhaltet die Drucktasten-Bedieneinheit 20 wie im gezeigten Ausführungsbeispiel eine Drucktaste 29, die eine erste Schaltstellung 29a, wie in Fig. 5 zu erkennen, einnimmt, wenn sich der Ventilschließkörper 13 in seiner Offenstellung befindet, und die eine zweite Schaltstellung 29b, wie in Fig. 3 zu erkennen, einnimmt, wenn sich der Ventilschließkörper 13 in seiner Schließstellung befindet. Die Drucktaste 29 besitzt in diesen beiden Schaltstellungen 29a, 29b unterschiedliche Axialpositionen. Dies ist aus einem Vergleich der Fig. 3 und 5 darin ersichtlich, dass die Drucktaste 29 in der ersten Schaltstellung 29a um einen in Fig. 5 wiedergegebenen Höhenabstand Da axial von einer Stirnseite des Ventilgehäuses 1 nach oben vorsteht, während sie in der zweiten Schaltstellung 29b um einen gegenüber dem Höhenabstand Da geringeren Höhenabstand Db axial nach oben von dieser Gehäusestirnseite vorsteht. Der Benutzer kann dadurch anhand der Axialposition der Drucktaste 29 relativ zum Ventilgehäuse 1 sehr leicht erkennen, ob sich die zweite Absperrventileinheit 8 in der Offenstellung oder der Schließstellung ihres Ventilschließkörpers 13 befindet, d.h., ob sich die Umstellventilvorrichtung momentan in ihrem den ersten Fluidauslass 5 schließenden und den zweiten Fluidauslass 6 öffnenden Zustand oder ihrem den ersten Fluidauslass 5 öffnenden und den zweiten Fluidauslass schließenden Zustand befindet.

Für den Aufbau der zweiten Absperrventileinheit 8 in der Ausführung als pilotventilgestützt nutzerbetätigte Membranventileinheit und für den Aufbau der Drucktasten-Bedieneinheit 20 kann jeweils irgendeine der hierfür dem Fachmann an sich bekannten, herkömmlichen Bauarten verwendet werden. So sind im gezeigten Beispiel hierfür Bauarten verwendet, wie sie von entsprechenden marktgängigen Absperrventilvorrichtungen der Anmelderin und z.B. auch von der oben erwähnten DE 10 2012 221 043 A1 bekannt ist, so dass dies hier keiner näheren Erläuterungen bedarf. Bei dieser Bauart erfolgt die Kraftübertragung von der Drucktaste 29 auf den Pilotventil-Steuerkolben 19 magnetisch, wozu an einem inneren Stirnende der Drucktasten-Bedieneinheit 20 ein Magnet 35 angeordnet ist. Der Ventilschließkörper 13 ist an einer ihn randseitig umgebenden Membran 30 gehalten und mit einer zentrischen Ausgleichsbohrung 31 versehen, die von einem Stirnende des Pilotventil-Steuerkolbens 19 absperrbar ist. Diverse Federelemente sorgen für eine geeignete Vorspannung der von ihnen beaufschlagten Komponenten. Eine Pilotventilbohrung 32 erstreckt sich durch den Ventilschließkörper 13 bzw. die Membran 30 hindurch, um die Zwischenkammer 4 mit einer Pilotventilkammer 33 als quasi einer Verlängerung der Zwischenkammer 4 zu verbinden. Durch die Pilotventilbohrung 32 kann sich optional eine durchmesserkleinere Reinigungsnadel hindurch erstrecken, um Verstopfungen der Pilotventilbohrung 32 vorzubeugen. Die Drucktasten-Bedieneinheit 20 kann beispielsweise eine geeignete Weiterschalteinrichtung nach Art eines Kugelschreiber-Schaltprinzips beinhalten, wie dem Fachmann an sich bekannt.

Wenn der Benutzer z.B. ausgehend vom Schaltzustand der Umstellventilvorrichtung gemäß Fig. 3 die Drucktasten-Bedieneinheit 20 betätigt, bewegt sich die Drucktaste 29 zunächst vor und anschließend über ihre vorherige axiale Endstellung hinaus zurück, wodurch über den Magneten 35 der Pilotventil-Steuerkolben 19 zurückbewegt wird, d.h. vom Ventilschließkörper 13 weg, so dass Fluid vom Pilotventilraum 33 über die Ausgleichsbohrung 31 abströmen kann. Dadurch nimmt der Fluiddruck auf den Ventilschließkörper 13 ab, was dazu führt, dass sich der Ventilschließkörper 13 in seine den zweiten Auslasskanal 11 öffnende Öffnungsstellung gemäß Fig. 5 bewegt. Dies öffnet die Fluidverbindung von der Zwischenkammer 4 zum zweiten Fluidauslass 6, wodurch sich wie oben erläutert der Ventilkolben 12 selbsttätig von seiner Öffnungsstellung gemäß Fig. 3 in seine Schließstellung gemäß Fig. 5 bewegt und den ersten Fluidauslass 5 gegenüber der Elnlasskammer 3 absperrt.

Wenn der Benutzer ausgehend vom Schaltzustand der Umstellventilvorrichtung gemäß Fig. 5 die Drucktasten-Bedieneinheit 20 betätigt, bewegt sich die Drucktaste 29 zunächst vor und nimmt den Pilotventil-Steuerkolben 19 mit, der dadurch den Ventilschließkörper 13 in seine Schließstellung bewegt und die Ausgleichsbohrung 31 absperrt. Fluid kann über die Pilotventilbohrung 32 in den Pilotventilraum 33 nachströmen. Anschließend bewegt sich die Drucktaste 29, nachdem der Benutzer sie losgelassen hat, wieder etwas zurück, bis sie ihre Endstellung von Fig. 3 erreicht hat. Der Ventilschließkörper 13 verbleibt in seiner Schließstellung, bis der Benutzer die Drucktaste 29 erneut betätigt. Das Fluid kann nicht mehr über den zweiten Auslasskanal 11 abströmen, so dass in der Zwischenkammer 4 ein Staudruck entsteht, durch den sich wie oben erläutert der Ventilkolben 12 selbsttätig in seine Öffnungsstellung gemäß Fig. 3 bewegt.

In entsprechenden Ausführungen ist das Ventilgehäuse 1 der Umstellventilvorrichtung wie im gezeigten Beispiel zylindrisch mit einer Längsmittenachse VL, und von dem ersten und dem zweiten Fluidauslass 5, 6 befindet sich der eine Fluidauslass an einem Zylinderumfangsabschnitt 1a des Ventilgehäuses 1 und der andere Fluidauslass an einem ersten axialen Stirnende 1b des Ventilgehäuses 1. Im konkret gezeigten Beispiel befindet sich der zweite Fluidauslass 6 am Zylinderumfangsabschnitt 1a und der erste Fluidauslass 5 an dem axialen Stirnende 1b, in alternativen Realisierungen ist es umgekehrt.

In entsprechenden Ausführungen befindet sich wie im gezeigten Beispiel der Fluideinlass 2 axial zwischen dem ersten Fluidauslass 5 und dem zweiten Fluidauslass 6. Alternativ kann er außerhalb des axialen Bereichs zwischen den beiden Fluidauslässen 5, 6 vorgesehen sein.

In entsprechenden Ausführungen befindet sich die Drucktaste 29 wie beim gezeigten Ausführungsbeispiel an einem dem ersten Stirnende 1b des Ventilgehäuses abgewandten zweiten Stirnende 1c des Ventilgehäuses 1. Alternativ kann sich die Drucktaste 29 am gleichen Stirnende des Ventilgehäuses 1 befinden wie der erste oder der zweite Fluidauslass 5, 6 oder der Fluideinlass 2, oder die Drucktaste 29 kann sich an einem zugeordneten Zylinderumfangsabschnitt des Ventilgehäuses 1 befinden. Im gezeigten Beispiel ist die Drucktaste 29 mit zur Längsmittenachse VL des Ventilgehäuses 1 fluchtender Tastenlängsachse angeordnet. Alternativ kann sie außermittig angeordnet sein. Ebenso kann der Pilotventil-Steuerkolben 19 fluchtend oder alternativ außermittig zu dieser Längsachse VL angeordnet sein, gleiches gilt für den Ventilkolben 12 bzw. dessen Fortsatz 14.

Wie die gezeigten und die weiteren oben erläuterten Ausführungsbeispiele deutlich machen, stellt die Erfindung eine Umstellventilvorrichtung zur Verfügung, die gegenüber herkömmlichen Umstellventilvorrichtungen Vorteile insbesondere hinsichtlich Funktionsweise, Fertigungsaufwand und/oder Betriebszuverlässigkeit bietet.

Die Erfindung ist hierbei nicht auf Umstellventilvorrichtungen mit genau zwei Fluidauslässen beschränkt, sondern umfasst auch Umstellventilvorrichtungen, die zusätzlich zu dem ersten und dem zweiten Fluidauslass einen oder mehrere weitere Fluidauslässe aufweisen, zwischen denen die Fluidverbindung zum Fluideinlass wahlweise umgeschaltet werden kann, wobei die Umstellventilvorrichtung dann entsprechend mehr als zwei Schaltzustände besitzt.

Die erfindungsgemäße Umstellventilvorrichtung ist insbesondere in der Sanitärtechnik verwendbar, beispielsweise zur Fluidumstellung bei Badewannenausläufen, Duschbrausen und Küchenbrausen.

## Patentansprüche

1. Umstellventilvorrichtung, insbesondere sanitäre Umstellventilvorrichtung, mit
- einem Ventilgehäuse (1),
- einem Fluideinlass (2) in das Ventilgehäuse (1),
- einer Einlasskammer (3) im Ventilgehäuse (1), in die der Fluideinlass (2) mündet,
- einer Zwischenkammer (4) im Ventilgehäuse (1), die über einen permanent offenen Verbindungskanal (9) mit der Einlasskammer (3) in Fluidverbindung steht,
- einem ersten Fluidauslass (5) aus dem Ventilgehäuse (1), der über einen absperrbaren ersten Auslasskanal (10) mit der Einlasskammer (3) in Fluidverbindung steht,
- einem zweiten Fluidauslass (6) aus dem Ventilgehäuse (1), der über einen absperrbaren zweiten Auslasskanal (11) mit der Zwischenkammer (4) in Fluidverbindung steht,
- einer selbsttätig fluiddruckgesteuerten, ersten Absperrventileinheit (7) zum Öffnen und Schließen des ersten Auslasskanals (10)
und
- einer nutzerbetätigten, zweiten Absperrventileinheit (8) zum Öffnen und Schließen des zweiten Auslasskanals (11),
- wobei die erste Absperrventileinheit (7) einen Ventilkolben (12) aufweist, der von der Differenz eines auf ihn wirkenden Fluiddrucks von der Einlasskammer (3) einerseits und der Zwischenkammer (4) andererseits gesteuert zwischen einer den ersten Auslasskanal (10) öffnenden Offenstellung und einer den ersten Auslasskanal (10) absperrenden Schließstellung bewegbar ist,
- wobei die zweite Absperrventileinheit (8) einen nutzerbetätigt zwischen einer den zweiten Auslasskanal (11) öffnenden Offenstellung und einer den zweiten Auslasskanal (11) absperrenden Schließstellung bewegbaren Ventilschließkörper (13) aufweist,
- wobei der Ventilkolben (12) seine Schließstellung einnimmt, wenn sich der Ventilschließkörper (13) in seiner Offenstellung befindet, und der Ventilkolben (12) seine Offenstellung einnimmt, wenn sich der Ventilschließkörper (13) in seiner Schließstellung befindet und
daurch gekennzeichnet, dass - Fluid in der Zwischenkammer (4) gestaut bleibt, wenn die zweite Absperrventileinheit (8) den zweiten Auslasskanal (11) geschlossen hält, und aus der Zwischenkammer (4) über den zweiten Fluidauslass (6) abströmt, wenn die zweite Absperrventileinheit (8) den zweiten Auslasskanal (11) offen hält.

2. Umstellventilvorrichtung nach Anspruch 1, wobei der Ventilkolben (12) axialbeweglich angeordnet ist und eine der Zwischenkammer (4) zugewandte, erste Kolbenstirnseite (12a) und eine der Einlasskammer (3) zugewandte, zweite Kolbenstirnseite (12b) aufweist, wobei eine Druckkontaktfläche der ersten Kolbenstirnseite (12a) größer als eine Druckkontaktfläche der zweiten Kolbenstirnseite (12b) ist.

3. Umstellventilvorrichtung nach Anspruch 2, wobei der Ventilkolben (12) einen sich von der zweiten Kolbenstirnseite (12b) axial erstreckenden kolbenstangenförmigen Fortsatz (14) aufweist, an dem ein Ventilschließteil (15) ausgebildet ist, der mit einem gehäuseseitigen Ventilsitz (16) zusammenwirkt.

4. Umstellventilvorrichtung nach einem der Ansprüche 1 bis 3, wobei die zweite Absperrventileinheit (8) eine pilotventilgestützt nutzerbetätigte Membranventileinheit ist.

5. Umstellventilvorrichtung nach Anspruch 4, wobei sie ein der Membranventileinheit zugeordnetes Pilotventil (18) mit einem axialbeweglichen Pilotventil-Steuerkolben (19) und eine auf den Pilotventil-Steuerkolben (19) wirkende, nutzerbetätigte Drucktasten-Bedieneinheit (20) umfasst.

6. Umstellventilvorrichtung nach Anspruch 5, wobei die Drucktasten-Bedieneinheit (20) eine Drucktaste (29) beinhaltet, die eine erste Schaltstellung (29a) einnimmt, wenn sich der Ventilschließkörper (13) in seiner Offenstellung befindet, und eine zweite Schaltstellung (29b) einnimmt, wenn sich der Ventilschließkörper (13) in seiner Schließstellung befindet, wobei die Drucktaste (29) in diesen beiden Schaltstellungen unterschiedliche Axialpositionen besitzt.

7. Umstellventilvorrichtung nach einem der Ansprüche 1 bis 6, wobei das Ventilgehäuse (1) zylindrisch ist und sich von dem ersten und dem zweiten Fluidauslass (5, 6) der eine Fluidauslass an einem Zylinderumfangsabschnitt (1a) des Ventilgehäuses (1) und der andere Fluidauslass an einem ersten axialen Stirnende (1b) des Ventilgehäuses (1) befindet.

8. Umstellventilvorrichtung nach Anspruch 7, wobei sich der Fluideinlass (2) axial zwischen dem ersten und dem zweiten Fluidauslass (5, 6) befindet.

9. Umstellventilvorrichtung nach Anspruch 7 oder 8 wenn von Anspruch 6 direkt oder indirekt abhängig, wobei sich die Drucktaste (29)
an einem dem ersten abgewandten zweiten Stirnende (1c) des Ventilgehäuses (1) befindet.

## Claims

1. Change-over valve device, preferably sanitary change-over valve device, comprising
- a valve housing (1),
- a fluid inlet (2) into the valve housing (1),
- an inlet chamber (3) within the valve housing (1), with the fluid inlet (2) leading into the inlet chamber,
- an intermediate chamber (4) within the valve housing (1), in fluid communication with the inlet chamber (3) via a permanently open connection channel (9),
- a first fluid outlet (5) out of the valve housing (1), in fluid communication with the inlet chamber (3) via a first outlet channel (10) capable of being shut off,
- a second fluid outlet (6) out of the valve housing (1), in fluid communication with the intermediate chamber (4) via a second outlet channel (11) capable of being shut off,
- a self-acting fluid pressure-controlled, first shut-off valve unit (7) for opening and closing the first outlet channel (10), and
- a user-operated, second shut-off valve unit (8) for opening and closing the second outlet channel (11),
- wherein the first shut-off valve unit (7) comprises a valve piston (12) which is movable controlled by the difference of a fluid pressure acting upon it from the inlet chamber (3) on the one hand and the intermediate chamber (4) on the other hand between an open position opening the first outlet channel (10) and a closed position blocking the first outlet channel (10), and
- wherein the second shut-off valve unit (8) comprises a valve closing body (13) movable upon user operation between an open position opening the second outlet channel (11) and a closed position blocking the second outlet channel (11), and
- wherein the valve piston (12) assumes its closed position when the valve closing body (13) is in its open position, and the valve piston (12) assumes its open position when the valve closing body (13) is in its closed position, and **characterized in that**
- fluid remains ponded in the intermediate chamber (4) when the second shut-off valve unit (8) closes the second outlet channel (11), and flows out of the intermediate chamber (4) via the second fluid outlet (6) when the second shut-off valve unit (8) opens the second outlet channel (11).

2. Change-over valve device according to claim 1, wherein the valve piston (12) is disposed for axial movement and comprises a first piston end side (12a) facing the intermediate chamber (4) and a second piston end side (12b) facing the inlet chamber (3), wherein a pressure contact surface of the first piston end side (12a) is greater than a pressure contact surface of the second piston end side (12b).

3. Change-over valve device according to claim 2, wherein the valve piston (12) comprises a piston rod-shaped extension (14) extending axially from the second piston end side (12b), whereon a valve closing part (15) is provided which cooperates with a valve seat (16) on the housing side.

4. Change-over valve device according to any one of claims 1 to 3, wherein the second shut-off valve unit (8) is a pilot valve-based user-operated diaphragm valve unit.

5. Change-over valve device according to claim 4, wherein it comprises a pilot valve (18) associated with the diaphragm valve unit having an axially movable pilot valve control piston (19) and a user-operated pushbutton operating unit (20) acting on the pilot valve control piston (19).

6. Change-over valve device according to claim 5, wherein the pushbutton operating unit (20) includes a pushbutton (29) which assumes a first switch position (29a) when the valve closing body (13) is in its open position, and assumes a second switch position (29b) when the valve closing body (13) is in its closed position, wherein the pushbutton (29) has different axial positions in said two switch positions.

7. Change-over valve device according to any one of claims 1 to 6, wherein the valve housing (1) is cylindrical and among the first and the second fluid outlets (5, 6) the one fluid outlet is located on a cylinder circumference portion (1a) of the valve housing (1) and the other fluid outlet is located on a first axial face end (1b) of the valve housing (1).

8. Change-over valve device according to claim 7, wherein the fluid inlet (2) is located axially between the first and the second fluid outlets (5, 6).

9. Change-over valve device according to claim 7 or 8 when directly or indirectly depending on claim 6, wherein the pushbutton (29) is located on a second face end (1c) of the valve housing (1) facing away from the first face end.

## Revendications

1. Dispositif de vanne d'inversion, en particulier dispositif de vanne d'inversion sanitaire, comprenant
- un boîtier de vanne (1),
- une entrée de fluide (2) vers le boîtier de vanne (1),
- une chambre d'entrée (3) dans le boîtier de vanne (1), dans laquelle débouche l'entrée de fluide (2),
- une chambre intermédiaire (4) dans le boîtier de vanne (1), qui est en communication fluidique avec la chambre d'entrée (3) par l'intermédiaire d'un canal de communication (9) ouvert en permanence,
- une première sortie de fluide (5) hors du boîtier de vanne (1), qui est en communication fluidique avec la chambre d'entrée (3) par l'intermédiaire d'un premier canal de sortie (10) obturable,
- une deuxième sortie de fluide (6) hors du boîtier de vanne (1), qui est en communication fluidique avec la chambre intermédiaire (4) par l'intermédiaire d'un deuxième canal de sortie (11) obturable,
- une première unité de vanne d'arrêt (7) commandée automatiquement par la pression du fluide pour ouvrir et fermer le premier canal de sortie (10), et
- une deuxième unité de vanne d'arrêt (8) actionnée par l'utilisateur pour ouvrir et fermer le deuxième canal de sortie (11),
- la première unité de vanne d'arrêt (7) comprenant un piston de vanne (12) qui peut être déplacé entre une position ouverte, ouvrant le premier canal de sortie (10), et une position fermée, obturant le premier canal de sortie (10), en étant commandé par la différence de la pression de fluide agissant sur lui depuis la chambre d'entrée (3) d'une part et la chambre intermédiaire (4) d'autre part,
- la deuxième unité de vanne d'arrêt (8) comprenant un corps de fermeture de vanne (13) qui peut être déplacé entre une position ouverte, ouvrant le deuxième canal de sortie (11), et une position fermée, obturant le deuxième canal de sortie (11), en étant actionné par l'utilisateur,
- le piston de vanne (12) prenant sa position fermée lorsque le corps de fermeture de vanne (13) se trouve dans sa position ouverte, et le piston de vanne (12) prenant sa position ouverte lorsque le corps de fermeture de vanne (13) se trouve dans sa position fermée,
**caractérisé en ce que**
le fluide reste bloqué dans la chambre intermédiaire (4) lorsque la deuxième unité de vanne d'arrêt (8) maintient fermé le deuxième canal de sortie (11), et s'écoule hors de la chambre intermédiaire (4) via la deuxième sortie de fluide (6) lorsque la deuxième unité de vanne d'arrêt (8) maintient ouvert le deuxième canal de sortie (11).

2. Dispositif de vanne d'inversion selon la revendication 1,
dans lequel le piston de vanne (12) est disposé de manière à pouvoir se déplacer axialement et présente une première face frontale de piston (12a) tournée vers la chambre intermédiaire (4) et une deuxième face frontale de piston (12b) tournée vers la chambre d'entrée (3), une surface de contact sous pression de la première face frontale de piston (12a) étant plus grande qu'une surface de contact sous pression de la deuxième face frontale de piston (12b).

3. Dispositif de vanne d'inversion selon la revendication 2,
dans lequel le piston de vanne (12) présente un prolongement (14) en forme de tige de piston s'étendant axialement depuis la deuxième face frontale de piston (12b), sur lequel est formé un élément de fermeture de vanne (15) qui coopère avec un siège de vanne (16) côté boîtier.

4. Dispositif de vanne d'inversion selon l'une des revendications 1 à 3, dans lequel la deuxième unité de vanne d'arrêt (8) est une unité de vanne à membrane actionnée par l'utilisateur et assistée par une vanne pilote.

5. Dispositif de vanne d'inversion selon la revendication 4, comprenant une vanne pilote (18) associée à l'unité de vanne à membrane et pourvue d'un piston de commande de vanne pilote (19) mobile axialement, et une unité de manœuvre à bouton-poussoir (20) actionnée par l'utilisateur et agissant sur le piston de commande de vanne pilote (19).

6. Dispositif de vanne d'inversion selon la revendication 5,
dans lequel l'unité de manœuvre à bouton-poussoir (20) comprend un bouton-poussoir (29) qui prend une première position de commutation (29a) lorsque le corps de fermeture de vanne (13) est dans sa position ouverte, et qui prend une deuxième position de commutation (29b) lorsque le corps de fermeture de vanne (13) est dans sa position fermée, le bouton-poussoir (29) ayant des positions axiales différentes dans ces deux positions de commutation.

7. Dispositif de vanne d'inversion selon l'une des revendications 1 à 6, dans lequel le boîtier de vanne (1) est cylindrique, et parmi les première et deuxième sorties de fluide (5, 6), l'une des sorties de fluide est située sur une portion périphérique cylindrique (1a) du boîtier de vanne (1) et l'autre sortie de fluide est située sur une première extrémité frontale axiale (1b) du boîtier de vanne (1).

8. Dispositif de vanne d'inversion selon la revendication 7,
dans lequel l'entrée de fluide (2) est située axialement entre la première et la deuxième sortie de fluide (5, 6).

9. Dispositif de vanne d'inversion selon la revendication 7 ou 8 lorsqu'elle dépend directement ou indirectement de la revendication 6,
dans lequel le bouton-poussoir (29) est situé à une deuxième extrémité frontale (1c) du boîtier de vanne (1), détournée de la première.
